# EUROPÄISCHE PATENTSCHRIFT

(11) **EP 2 545 310 B1**
(45) Veröffentlichungstag und Bekanntmachung des Hinweises auf die Patenterteilung: **09.09.2015**
(21) Anmeldenummer: 10788254.0
(22) Anmeldetag: 03.12.2010
(51) Int. Cl.: F16K 11/16, F16K 35/16, B60G 17/052

(54) **ELEKTROMAGNETISCHE ENTRIEGELUNGSEINRICHTUNG UND VENTILEINRICHTUNG**
ELECTROMAGNETIC UNLOCKING DEVICE AND VALVE DEVICE
SYSTÈME DE DÉVERROUILLAGE ÉLECTROMAGNÉTIQUE ET DISPOSITIF FORMANT SOUPAPE

(30) Priorität: 09.03.2010 DE 102010010659
(43) Veröffentlichungstag der Anmeldung: 16.01.2013
(73) Patentinhaber: WABCO GmbH, 30453 Hannover (DE)
(72) Erfinder: SIEKER, Armin, 33611 Bielefeld (DE); TRAMBAUER, Alexander, 30966 Hemmingen (DE)
(74) Vertreter: Lauerwald, Jörg
(86) Internationale Anmeldenummer: PCT/EP2010/007350
(87) Internationale Veröffentlichungsnummer: WO 2011/110205

(56) Entgegenhaltungen:
- DE-A1-102006 006 439
- DE-A1-102007 045 012
- DE-U1- 29 521 137
- US-A- 4 730 471
- US-A- 4 733 214
- US-A1- 2008 197 004

## Beschreibung

Die Erfindung betrifft eine elektromagnetisch entriegelbare Einrichtung mit einer Verriegelungseinheit und einem gegenüber der Verriegelungseinheit bewegbaren ersten Bauteil gemäß den Ansprüchen 1 und 2. Die Erfindung betrifft ferner eine Ventileinrichtung für eine Luftfederungsanlage in einem Fahrzeug, bei der eine elektromagnetisch entriegelbare Einrichtung eingesetzt ist, gemäß den Ansprüchen 9 und 10.

Solche Entriegelungseinrichtungen können bei Bauteilen unterschiedlicher Art zum Einsatz kommen, bei denen in bestimmten Situationen eine Verriegelung gegen unerwünschte Bewegungen erfolgen soll, die durch einen Elektromagneten entriegelbar sein soll. Als Beispiel seien manuell betätigbare Heben/Senken-Ventile für niveaugeregelte Luftfederungsanlagen bei Fahrzeugen genannt. Solche Heben/Senken-Ventile, früher auch Drehschieberventile genannt, erlauben es, das Niveau des Fahrzeugs nach Wunsch durch willkürliche Luftbefüllung von Luftfederbälgen anzuheben oder durch Entlüftung abzusenken. Ein solches Heben/Senken-Ventil weist ein manuelles Betätigungselement auf, das beispielsweise in die Stellungen Heben, Senken, Stopp und Fahrt stellbar ist. In der Stellung Heben erfolgt eine Luftbefüllung der Luftfederbälge. In der Stellung Senken werden die Luftfederbälge entlüftet. In der Stellung Stopp wird die Luftmenge in den Luftfederbälgen gehalten. In der Stellung Fahrt werden die Luftfederbälge mit einem Niveauregelventil oder einer elektronischen Niveauregelung verbunden. Hierbei ist es erwünscht, dass das Heben/Senken-Ventil zumindest in der Stopp-Stellung, ggf. zusätzlich in den Stellungen Heben und Senken, automatisch verriegelt ist, z. B. durch eine Art Rasteinrichtung. Sobald das mit der niveaugeregelten Luftfederungsanlage ausgestattete Fahrzeug wieder den Fahrbetrieb aufnimmt, ist eine automatische Rückstellung in die Stellung Fahrt erwünscht, damit nicht unerwünschter Weise das Heben/Senken-Ventil in der Stopp-Stellung verbleibt und hierdurch die Niveauregelfunktion unwirksam ist. Die Rückstellung in die Stellung Fahrt kann beispielsweise durch Federkraftbeaufschlagung eines Betätigungselements erfolgen, wobei die Verriegelung automatisch entriegelt werden muss. Hierfür bietet sich beispielsweise eine Elektromagnetanordnung zur Entriegelung an.

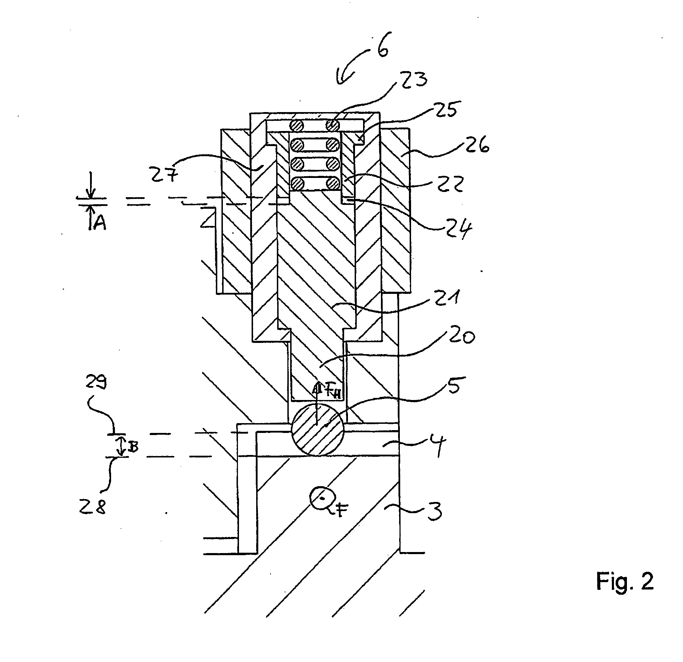

Aus dem Patent DE 10 2006 006 439 B4 ist eine Ventileinrichtung zur manuellen Veränderung der Niveaulage eines luftgefederten Fahrzeuges bekannt, bei der eine elektromagnetisch entriegelbare Einrichtung mit einer Verriegelungseinheit und einem gegenüber der Verriegelungseinheit bewegbaren Bedienelement bekannt ist (dort Figur 2). Bei der Optimierung der dortigen Elektromagnetanordnung besteht der Zielkonflikt, dass einerseits ein bestimmter Betätigungshub der Elektromagnetanordnung erforderlich ist, andererseits die Elektromagnetanordnung eine gewisse Betätigungskraft aufbringen muss. Ein bestimmter Betätigungshub bedingt bei der Elektromagnetanordnung, dass ein gewisser Abstand zwischen einem bewegbaren Anker und einem Kernelement vorhanden sein muss. Ein entsprechend großer Abstand bedingt jedoch, dass die anfängliche Anzugskraft der Elektromagnetanordnung mit zunehmendem Hub geringer ausfällt. US 4733214 offenbart eine Einrichtung gemäß dem Oberbegriff der Ansprüche 1 und 2. Grundsätzlich kann ein entsprechender Betätigungshub bei entsprechender Betätigungskraft durch entsprechend große Dimensionierung der Elektromagnetanordnung erreicht werden. Allerdings ist es aus Bauraum- und Kostengründen nicht wünschenswert, die Elektromagnetanordnung übermäßig groß auszugestalten.

Der Erfindung liegt daher die Aufgabe zugrunde, eine elektromagnetisch entriegelbare Einrichtung, insbesondere für die Verwendung in einer Ventileinrichtung für eine Luftfederungsanlage in einem Fahrzeug, anzugeben, die bei kompakter Bauweise zugleich eine hohe Anzugskraft und einen großen Betätigungshub erlaubt.

Diese Aufgabe wird durch die in den Ansprüchen 1, 2, 9 und 10 angegebene Erfindung gelöst. Die Unteransprüche geben vorteilhafte Ausgestaltungen der Erfindung an.

Gemäß der Erfindung ist vorgesehen, dass bei der Elektromagnetanordnung der Elektromagnet-Hub und der vom Verriegelungselement insgesamt ausführbare Hub voneinander entkoppelt sind, d. h. der Hub des Verriegelungselements entspricht nicht dem Elektromagnet-Hub. Der vom Verriegelungselement ausgeführte Hub ist größer als der Elektromagnet-Hub. Dies erlaubt es, die Elektromagnet-Anordnung auf eine hohe Anzugskraft und das Verriegelungselement separat auf den erforderlichen Hub hin zu optimieren.

Gemäß einer vorteilhaften Weiterbildung der Erfindung ist das erste Bauteil, das z.B. dem manuellen Betätigungselement eines Heben/Senken-Ventil entsprechen kann, durch eine auf das erste Bauteil einwirkende Kraft gegenüber der Verriegelungseinheit in einer anderen Richtung bewegbar als die Richtung des Elektromagnet-Hubs. Die auf das erste Bauteil einwirkende Kraft kann beispielsweise durch eine Rückstellfeder erzeugt sein. Durch die Krafteinwirkung auf das erste Bauteil in der anderen Richtung als die Elektromagnet-Hub-Richtung ist eine entsprechende Umlenkung der auf das erste Bauteil einwirkenden Kraft auf Teile der Elektromagnetanordnung möglich, was die Bewegung des bewegbaren Teils der Elektromagnetanordnung beim Entriegeln der Verriegelungseinheit unterstützt.

Gemäß einer vorteilhaften Weiterbildung der Erfindung ist vorgesehen, dass über eine Kontaktstelle zwischen dem ersten Bauteil und dem Verriegelungselement eine Kraftkomponente in Richtung des vom Verriegelungselement ausgeführten Hubs erzeugt ist. Gemäß einer vorteilhaften Weiterbildung der Erfindung ist vorgesehen, dass über eine Kontaktstelle zwischen dem ersten Bauteil und dem Verriegelungselement eine Kraftkomponente in Richtung des Elektromagnet-Hubs erzeugt ist.

Gemäß einer vorteilhaften Weiterbildung der Erfindung ist die Richtung des vom Verriegelungselement von der das erste Bauteil fixierenden Position in die die Fixierung freigebende Position ausgeführten Hubs im Wesentlichen gleich der Richtung des Elektromagnet-Hubs.

Gemäß einer vorteilhaften Weiterbildung der Erfindung ist der Anker an seiner dem Verriegelungselement abgewandten Seite federkraftbeaufschlagt.

Gemäß einer vorteilhaften Weiterbildung der Erfindung ist vorgesehen, dass das Verriegelungselement über ein gegenüber dem Anker verschiebbares Betätigungsteil in die das erste Bauteil fixierende Position beaufschlagbar ist. Das gegenüber dem Anker verschiebbare Betätigungsteil ermöglicht eine Entkopplung des Betätigungshubs des Ankers bei Elektromagnet-Betätigung von dem ausgeführten Hub des Verriegelungselements.

Gemäß einer vorteilhaften Weiterbildung der Erfindung ist der Anker über das Betätigungsteil an seiner dem Verriegelungselement abgewandten Seite federkraftbeaufschlagt. Die Federkraftbeaufschlagung ist damit mittelbar über das Betätigungsteil zu dem Anker geführt.

Gemäß einer vorteilhaften Weiterbildung der Erfindung ist das Verriegelungselement mit dem Betätigungsteil einstückig ausgebildet, z. B. durch Formung aus demselben Ausgangswerkstück oder durch eine kraft-, stoff- oder formschlüssige Verbindung.

Gemäß einer vorteilhaften Weiterbildung der Erfindung ist das Betätigungsteil durch den Anker hindurchgeführt, z. B. durch eine zentrale Bohrung des Ankers.

Gemäß einer vorteilhaften Weiterbildung der Erfindung ist das Kernelement in Richtung des Elektromagnet-Hubs verschiebbar ausgebildet. Ein solches verschiebbares Kernelement hat den Vorteil, dass der Elektromagnet-Hub von dem Hub des Verriegelungselements entkoppelbar ist. So kann über das verschiebbare Kernelement bei unbetätigter Elektromagnetanordnung ein kleiner Luftspalt zwischen dem Anker und dem Kernelement vorgesehen werden, was eine hohe Anzugskraft der Elektromagnetanordnung ermöglicht. Nach Betätigung der Elektromagnetanordnung wirkt sich die Verschiebbarkeit des Kernelements dahingehend vorteilhaft aus, dass das Kernelement nicht wie bei bekannten Elektromagnetanordnungen die Bewegung des Ankers begrenzt, sondern in Folge der Verschiebbarkeit auch eine weitere Bewegung des Ankers zulässt und hiermit einen Hub des Verriegelungselements zulässt, der größer ist als der Elektromagnet-Hub, d.h. der bei unbetätigter Elektromagnetanordnung gebildete Luftspalt.

Gemäß einer vorteilhaften Weiterbildung der Erfindung weist das Kernelement ein Abstandshalteelement auf, über das das verschiebbare Kernelement bei unbetätigter Elektromagnetanordnung in dem den Elektromagnet-Hub definierenden Abstand von dem Anker gehalten ist. Hierdurch wird ein definierter Luftspalt bei unbetätigter Elektromagnetanordnung vorgesehen.

Gemäß einer vorteilhaften Weiterbildung der Erfindung ist das verschiebbare Kernelement an der dem Anker abgewandten Seite federkraftbeaufschlagt.

Gemäß einer vorteilhaften Weiterbildung der Erfindung ist das Verriegelungselement mit dem Anker einstückig ausgebildet, z. B. durch Formung aus demselben Ausgangswerkstück oder durch eine kraft-, stoff- oder formschlüssige Verbindung.

Gemäß einer vorteilhaften Weiterbildung der Erfindung ist das verschiebbare Kernelement auf der dem Verriegelungselement abgewandten Seite des Ankers angeordnet.

Die zuvor erläuterte elektromagnetisch entriegelbare Einrichtung kann vorteilhaft in einer Ventileinrichtung für eine Luftfederungsanlage in einem Fahrzeug gemäß Anspruch 9 oder Anspruch 10 verwendet werden.

Die Ventileinrichtung gemäß Anspruch 9 ist als durch eine Niveauregelungseinrichtung steuerbare Ventileinrichtung ausgebildet. Hierfür weist die Ventileinrichtung einen Steuereingang auf. Die Steuerung über den Steuereingang kann z. B. durch elektrische Signale oder pneumatische Signale erfolgen. So kann die Ventileinrichtung beispielsweise eine elektromagnetische Betätigungsanordnung aufweisen, über die eine pneumatische Verbindung zwischen dem Balganschluss und dem Vorratsanschluss oder dem Entlüftungsanschluss hergestellt werden kann oder, zum Halten der Druckluftmenge im Luftfederbalg, der Balganschluss abgesperrt werden kann. Vorteilhaft wird in diesem Fall eine elektronische Steuereinheit zur Steuerung der Niveauregelung mit dem Steuereingang der Ventileinrichtung verbunden.

Die Ventileinrichtung gemäß Anspruch 10 eignet sich insbesondere für sog. konventionell niveaugeregelte Luftfederungsanlagen, bei denen z. B. ein mechanisches Niveauregelventil eingesetzt wird. Wie erkennbar ist, eignet sich die erfindungsgemäße elektromagnetisch entriegelbare Einrichtung vorteilhaft sowohl für eine Ventileinrichtung nach Anspruch 9 als auch für eine Ventileinrichtung nach Anspruch 10, da in beiden Fällen eine Verriegelung in bestimmten Betätigungspositionen sinnvoll ist, die durch ein elektrisches Signal an die elektromagnetisch entriegelbare Einrichtung aufhebbar sein soll.

Die Erfindung wird nachfolgend anhand von Ausführungsbeispielen unter Verwendung von Zeichnungen näher erläutert.

Es zeigen
- Figur 1: eine Ventileinrichtung für eine Luftfederungsanlage und
- Figur 2: eine erste Ausführungsform einer elektromagnetisch entriegelbaren Einrichtung und
- Figur 3: eine zweite Ausführungsform einer elektromagnetisch entriegelbaren Einrichtung und
- Figur 4: eine Detaildarstellung einer Ventileinrichtung für eine Luftfederungsanlage.

In den Figuren werden gleiche Bezugszeichen für einander entsprechende Elemente verwendet.

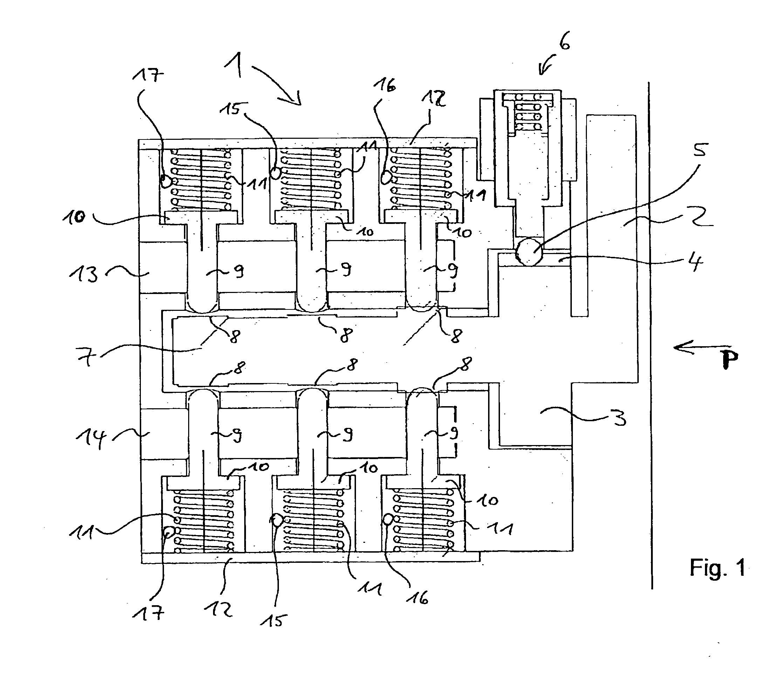

Die Figur 1 zeigt eine Ventileinrichtung 1 zur Steuerung einer Luftfederungsanlage eines Fahrzeugs in Schnittdarstellung. Die dargestellte Ventileinrichtung 1 weist ein Gehäuse auf, in dem sechs über eine Nockenwelle 7 betätigbare Plattenventile 10 angeordnet sind. Die Plattenventile 10 weisen Ventilplatten auf, die jeweils über eine Feder 11 an einer Gehäusewand 12 der Ventilanrichtung 1 abgestützt sind. Über die Federn 11 werden die Ventilplatten gegen Gehäusevorsprünge gedrückt, wodurch die Plattenventile 10 in der geschlossenen Stellung gehalten werden. Durch Betätigung der Nockenwelle 7 können die Plattenventile 10 durch an der Nockenwelle 7 vorgesehene Betätigungsnocken 8 über Betätigungsstößel 9 in eine geöffnete Stellung gebracht werden. Die Plattenventile 10 haben damit eine 2/2-Ventilfunktion (offen oder geschlossen). Zwei Kammern der mittleren Plattenventile, in denen die Federn 11 angeordnet sind, sind mit einem Vorratsanschluss 15 der Ventileinrichtung 1 verbunden. An den Vorratsanschluss 15 wird bei Verwendung der Ventileinrichtung in einer Luftfederungsanlage eines Fahrzeuges ein Druckluftvorrat, z. B. ein Vorratsbehälter, der Druckluftanlage angeschlossen. Die mit der Feder 11 versehenen Kammern der rechten Plattenventile 10 sind über einen Entlüftungsanschluss 16, ggf. über einen Geräuschdämpfer, mit der Atmosphäre verbunden. Die mit der Feder 11 versehenen Kammern der linken Plattenventile 10 sind mit einem Niveauregelungsanschluss 17 verbunden. An den Niveauregelungsanschluss 17 wird bei Verwendung der Ventileinrichtung in einer Luftfederungsanlage eines Fahrzeuges eine Niveauregelungseinrichtung angeschlossen, z. B. ein mechanisches Niveauregelventil oder eine elektronische Niveauregelungseinheit.

Die Ventileinrichtung 1 weist zwei getrennte Balganschlüsse 13, 14 zur Verwendung in einer zweikreisigen Luftfederungsanlage auf. Jenseits der mit den Federn 11 versehenen Kammern sind die drei oberen Plattenventile 10 mit einem ersten Balganschluss 13 verbunden. Die unteren drei Plattenventile 10 sind jenseits der mit den Federn 11 versehenen Kammern mit einem zweiten Balganschluss 14 verbunden. Durch entsprechende Beaufschlagung einzelner Plattenventile über die Betätigungsnocken 8 und die Betätigungsstößel 9 können diese in eine geöffnete Position gebracht werden. Hierdurch kann der jeweilige Balganschluss 13, 14 wahlweise mit dem Vorratsanschluss 15, dem Entlüftungsanschluss 16 oder dem Niveauregelungsanschluss 17 verbunden werden oder gegenüber diesen Anschlüssen abgesperrt werden.

Die Nockenwelle 7 ist drehfest mit einem Verriegelungskörper 3 und einem manuellen Betätigungshebel 2 verbunden. Der Betätigungshebel 2, der Verriegelungskörper 3 und die Nockenwelle 7 sind dabei Bestandteile einer manuellen Betätigungseinrichtung der Ventileinrichtung 1. Der Verriegelungskörper 3 ist von einer in Figur 1 nicht dargestellten Drehfeder beaufschlagt, durch die der Verriegelungskörper 3 und damit die Nockenwelle 7 in eine neutrale Position durch Federkraft rückstellbar sind. In der neutralen Position ist der jeweilige Balganschluss 13, 14 mit dem Niveauregelungsanschluss 17 verbunden.

In der Figur 1 ist zudem als Teil einer elektromagnetisch entriegelbaren Einrichtung eine Verriegelungseinheit 6 dargestellt, die in Wirkverbindung mit einem,als Kugel ausgebildeten Verriegelungselement 5 steht. Das Verriegelungselement 5 greift im verriegelten Zustand der Verriegelungseinheit 6 in eine Nut 4 des Verriegelungskörpers 3 ein. Auf diese Teile der elektromagnetisch entriegelbaren Einrichtung wird nachfolgend anhand der Figuren 2 bis 4 näher eingegangen. Wie erkennbar ist, ist der Verriegelungskörper 3 ein gegenüber der Verriegelungseinheit 6 bewegbares erstes Bauteil. Das Verriegelungselement 5 kann auch eine andere Form aufweisen, z.B. eine zylindrische Form.

Die Figur 2 zeigt eine erste Ausführungsform der Verriegelungseinheit 6. Erkennbar ist eine Elektromagnetanordnung mit einem Anker 21 und einem Kernelement 22, die innerhalb eines Elektromagnetgehäusekörpers 27 angeordnet sind. Der Elektromagnetgehäusekörper 27 kann aus einem magnetisch neutralen Material, z. B. Kunststoff gefertigt sein, oder aus einem den magnetischen Rückschluss unterstützenden, magnetisch wirksamen Material, wie z. B. Eisen oder einem anderen weichmagnetischem Material. Ebenso sind der Anker 21 und das Kernelement 22 aus magnetisch wirksamem Material, z. B. Eisen oder einem anderen weichmagnetischem Material, gefertigt. Um den Elektromagnetgehäusekörper 27 herum ist eine elektrische Spule 26 angeordnet, die als Erregerspule der Elektromagnetanordnung dient. Der Anker 21 ist gegenüber einer Rückwand des Elektromagnetgehäusekörpers 27 über eine Feder 23 gegen Federkraft verschiebbar abgestützt. Ein in Form eines Stößels ausgebildetes Betätigungsteil 20 ist einstückig mit dem Anker 21 ausgebildet und weist von der Feder 23 fort in Richtung des Verriegelungselements 5. Im unbetätigten Zustand der Elektromagnetanordnung beaufschlagt das Betätigungsteil 20 das Verriegelungselement 5 mit der von der Feder 23 auf den Anker 21 ausgeübten Kraft. Hierdurch wird das Verriegelungselement sicher in der Nut 4 gehalten und verriegelt den Verriegelungskörper 3 gegen eine unerwünschte Bewegung. Das Verriegelungselement 5 und Betätigungsteil 20 können auch einstückig ausgebildet sein.

Wie in der Figur 2 außerdem erkennbar ist, weist ein Luftspalt 24 zwischen dem Anker 21 und dem Kernelement 22 die Größe A auf, die zugleich den durch elektrische Erregung der Spule 26 ausführbaren Elektromagnet-Hub ausmacht. Das Kernelement 22 ist in dem Gehäusebauteil 27 verschieblich angeordnet, so dass eine Längsverschiebung des Kernelements 22 im durch die äußeren Begrenzungen festgelegten Hubbereich möglich ist. Eine Begrenzung der Längsbeweglichkeit des Kernelements 22 in Richtung zu dem Verriegelungselement 5 wird durch einen umlaufenden Kragen 25 des Kernelements 22 bewirkt. Der Kragen 25 dient damit zugleich als Abstandshalteelement zur Einhaltung eines vorgegebenen Luftspalts A.

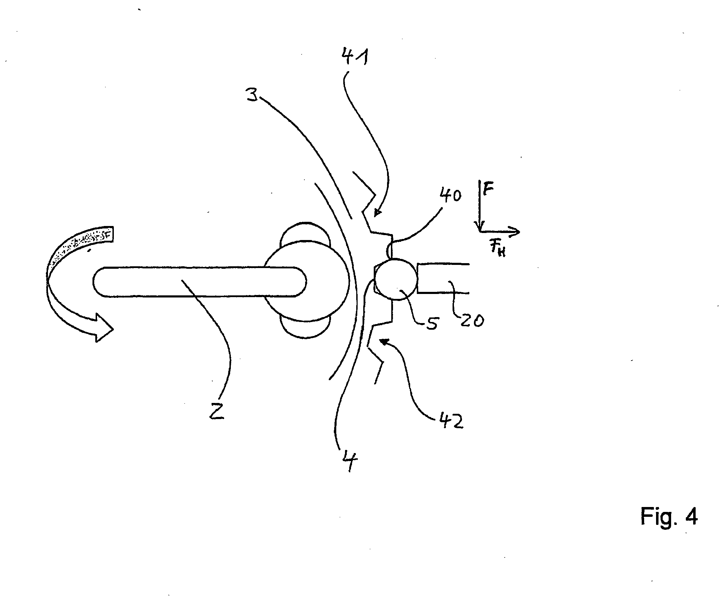

Die Figur 2 zeigt zudem eine Kraft F, die von einer Rückstellfeder des Verriegelungskörpers 3 auf den Verriegelungskörper 5 ausgeübt wird. Die Kraft F verläuft in der Ansicht gemäß Figur 2 senkrecht zur Papierebene. Durch eine Seitenwand der Verriegelungsnut 4 (erkennbar in Figur 4) wird eine von der Rückstellkraft F erzeugte Kraftkomponente F_{H} in Richtung des Elektromagnet-Hubs auf den Anker 21 ausgeübt. In Folge einer Betätigung der Elektromagnetanordnung führt der Anker 21 einen durch die Elektromagnetwirkung erzeugten Hub der Größe A aus. Das hierdurch von der Kraft der Feder 23 entlastete Verriegelungselement 5 wird in Folge der Kraftkomponente F_{H} weiter in Richtung des Elektromagnet-Hubs bewegt, wobei die Anordnung derart ausgelegt ist, dass in Folge der Kraftkomponente F_{H} das Verriegelungselement 5 einen Betätigungshub B ausführt. Hierbei bewegt sich das Verriegelungselement 5, bezogen auf den Boden der Nut 4, von einer Position 28 in eine Position 29. In Folge dessen führt auch der Anker 21 und das Kernelement 22 einen Hub der Größe B aus. Die Auslegung erfolgt derart, dass die Kraftkomponente F_{H} zumindest nach Ausführung des Elektromagnet-Hubs größer ist als die Kraft der Feder 23.

Durch den Hub A ändert sich die Kontaktstelle zwischen dem Verriegelungselement 5 und der Seitenwand der Verriegelungsnut 4. Hierdurch ändert sich die Wirkrichtung der in das Verriegelungselement 5 eingeleiteten Kraft, wodurch Kraftkomponente F_{H} größer wird und die Kraft der Feder 23 überwindet, was schließlich einen Betätigungsweg B - A entgegen der Kraft der Feder 23 ermöglicht.

Entsprechend dem auszuführenden Hub ist der zwischen der Rückwand des Gehäusebauteils 27 und dem Abstandshalteelement 25 vorzusehende Freiraum so zu bemessen, dass bei unbetätigter Elektromagnetanordnung mindestens das Maß B - A vorhanden ist.

Das Kernelement 22 gemäß Figur 2 kann zusätzlich von einer separaten, in Figur 2 nicht dargestellten Feder gegenüber der Rückwand des Gehäusebauteils 27 beaufschlagt werden. Allerdings kann auf eine solche Feder auch verzichtet werden, da das Kernelement 22 frei verschieblich ist und bei einer Betätigung der Elektromagnetanordnung in Folge der Magnetkraft ohne weiteres in Richtung des Ankers 21 gezogen wird.

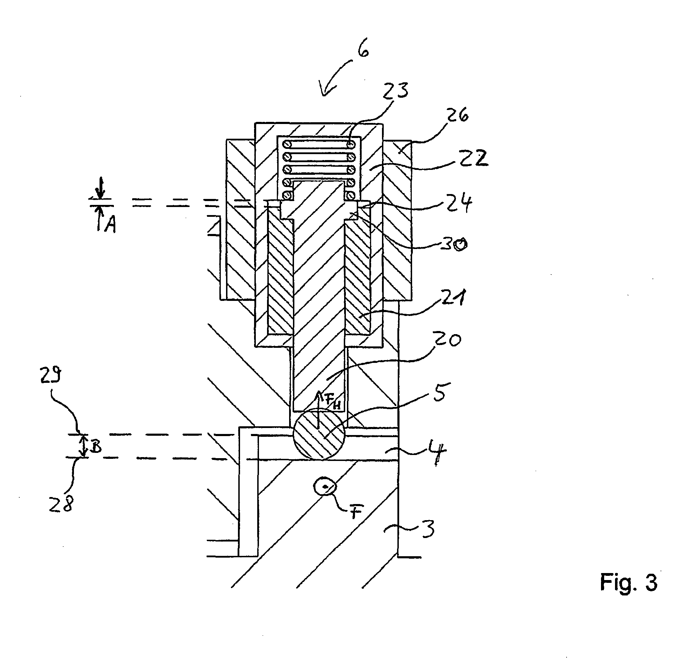

Die Figur 3 zeigt eine zweite Ausführungsform der Verriegelungseinheit 6. Der gemäß Figur 2 erläuterte Elektromagnetgehäusekörper 27 ist zugleich als magnetisch wirksames Kernelement 22 ausgebildet, das zudem als Rückschlusselement zur Steigerung des magnetischen Rückschlusses dient. Die Verriegelungseinheit 6 gemäß Figur 3 weist ein gegenüber dem Anker 21 längs verschiebbares Betätigungsteil 20 auf, über das das Verriegelungselement 5 mit der Kraft der Feder 23 beaufschlagt ist. Das Betätigungsteil 20 ist in einem mit größerem Umfang versehenen Bereich 30 von der Feder 23 beaufschlagt, die sich wiederum an der Rückwand des Kernelements 22 abstützt.

Bei einer Betätigung der Elektromagnetanordnung führt der Anker 21 eine Bewegung um den Hub A in Richtung zu dem Kernelement 22 hin aus. Hierbei wird das Betätigungsteil 20 entsprechend mitgenommen. Hiernach wird das Betätigungsteil 20 in Folge der nun höheren Kraftkomponente F_{H} um den weiteren Betätigungsweg B - A auf vergleichbare Weise weiterbewegt wie für die Ausführungsform gemäß Figur 2 beschrieben. Hierbei bewegt sich das Betätigungsteil 20 relativ zum Anker 21, der dann bereits an der Schulter des Kernelements 22 anliegt.

Bei betätigter Elektromagnetanordnung ist die Verriegelung durch die Verriegelungseinheit 6 aufgehoben. Der Verriegelungskörper 3 wird dann in Folge der Kraft der Drehfeder in die Neutralstellung verbracht.

Die Figur 4 zeigt ausschnittsweise die Ventileinrichtung 1 in Richtung des in Figur 1 dargestellten Pfeils P. Erkennbar ist der manuelle Betätigungshebel 2 sowie der Verriegelungskörper 3. Erkennbar sind ferner das Verriegelungselement 5 sowie ein Endabschnitt des Betätigungsteils 20, das mit dem Verriegelungselement 5 in Kontakt ist. Der Verriegelungskörper 3 weist drei Nuten 4, 41, 42 auf, die jeweils zur Aufnahme des Verriegelungselements 5 vorgesehen sind und Verriegelungspositionen des Verriegelungskörpers 3 definieren. Die Nuten 4, 41, 42 weisen jeweils Seitenwände 40 auf. Die Seitenwände 40 können senkrecht zur Umfangsrichtung oder, wie in Fig. 4 dargestellt, schräg dazu ausgebildet sein. Wie erkennbar ist, erfolgt eine Krafteinleitung der in Umfangsrichtung wirkenden Kraft F in das Verriegelungselement 5 an der Kontaktstelle zwischen dem Verriegelungselement 5 und der Seitenwand 40. Durch Betätigung der Elektromagnetanordnung verschiebt sich diese Kontakt infolge des vom Anker 21 ausgeführten Hubs A. Dies führt zu einer Vergrößerung der Kraftkomponente F_{H}, wodurch schließlich der Gesamthub B - A ausgeführt wird.

Wie erkennbar ist, bestimmen vorrangig die Nuttiefe und die Form und Größe des Verriegelungselements 5 und damit der Punkt der Krafteinleitung in das Verriegelungselement 5 und damit die Wirkrichtung der Krafteinleitung die Größe der Rastwirkung. Die Verriegelungseinheit 3 kann durch manuelle Betätigung des Betätigungshebels 2 mit entsprechendem Kraftaufwand von einer Verriegelungsposition in eine andere verschwenkt werden, auch ohne Entriegelung der Verriegelungseinrichtung.

Der Betätigungshebel 2 ist als Teil eines manuellen Betätigungselements in die Stellungen Heben, Senken, Stopp und Fahrt stellbar. In der Neutralstellung, d.h. in einer Mittenposition des Betätigungshebels 2, ist die Stellung Fahrt eingenommen. Bei einem Verstellen des Betätigungshebels 2 nach links oder rechts wird in beiden Fällen zunächst die Stellung Stopp erreicht, d.h. es ist eine linke Stopp-Stellung und eine rechte Stopp-Stellung vorgesehen. Bei einer Weiterbewegung des Betätigungshebels 2 aus der linken Stopp-Stellung wird die Stellung Heben eingenommen. Bei einer Weiterbewegung des Betätigungshebels 2 aus der rechten Stopp-Stellung wird die Stellung Senken eingenommen. In der Stellung Heben ist der Balganschluss 13, 14 mit dem Vorratsanschluss 15 verbunden. In der Stellung senken ist der Balganschluss 13, 14 mit dem Entlüftungsanschluss 16 verbunden. In den beiden Stopp-Stellungen ist der Balganschluss 13, 14 mit abgesperrt. In der Stellung Fahrt ist der Balganschluss 13, 14 mit dem Niveauregelungsanschluss 17 verbunden.

Die mit der Nut 41 korrespondierende Verriegelungsposition entspricht der rechten Stopp-Stellung. Die mit der Nut 42 korrespondierende Verriegelungsposition entspricht der linken Stopp-Stellung. Die mit der Nut 4 korrespondierende Verriegelungsposition entspricht der Stellung Fahrt. Für eine Verriegelung in den Stellungen Heben und/oder Senken können in dem Verriegelungskörper 3 weitere Nuten zur Definition weiterer Verriegelungspositionen vorgesehen sein.

## Patentansprüche

1. Elektromagnetisch entriegelbare Einrichtung mit einer Verriegelungseinheit (6) und einem gegenüber der Verriegelungseinheit (6) bewegbaren ersten Bauteil (3) mit folgenden Merkmalen:
a) die Verriegelungseinheit (6) weist ein mit dem ersten Bauteil (3) zur Fixierung des ersten Bauteils in Eingriff stehendes Verriegelungselement (5) auf,
b) das Verriegelungselement (5) ist durch Betätigung einer Elektromagnetanordnung (21, 22, 25, 26, 27) von einer das erste Bauteil (3) fixierenden Position (28) in eine die Fixierung freigebende Position (29) stellbar,
c) die Elektromagnetanordnung (21, 22, 25, 26, 27) weist wenigstens einen Anker (21) und wenigstens ein Kernelement (22) auf,
d) zwischen dem Kernelement (22) und dem Anker (21) ist bei unbetätigter Elektromagnetanordnung (21, 22, 25, 26, 27) ein einen Elektromagnet-Hub (A) definierender Abstand (24) gebildet,
e) der vom Verriegelungselement (5) von der das erste Bauteil (3) fixierenden Position (28) in die die Fixierung freigebende Position (29) ausgeführte Hub (B) ist größer als der Elektromagnet-Hub (A), **dadurch gekennzeichnet, dass** das Verriegelungselement (5) über ein in dem Anker (21) verschiebbares Betätigungsteil (20) in die das erste Bauteil (3) fixierende Position (28) beaufschlagbar ist.

2. Elektromagnetisch entriegelbare Einrichtung mit einer Verriegelungseinheit (6) und einem gegenüber der Verriegelungseinheit (6) bewegbaren ersten Bauteil (3) mit folgenden Merkmalen:
a) die Verriegelungseinheit (6) weist ein mit dem ersten Bauteil (3) zur Fixierung des ersten Bauteils in Eingriff stehendes Verriegelungselement (5) auf,
b) das Verriegelungselement (5) ist durch Betätigung einer Elektromagnetanordnung (21, 22, 25, 26, 27) von einer das erste Bauteil (3) fixierenden Position (28) in eine die Fixierung freigebende Position (29) stellbar,
c) die Elektromagnetanordnung (21, 22, 25, 26, 27) weist wenigstens einen Anker (21) und wenigstens ein Kernelement (22) auf,
d) zwischen dem Kernelement (22) und dem Anker (21) ist bei unbetätigter Elektromagnetanordnung (21, 22, 25, 26, 27) ein einen Elektromagnet-Hub (A) definierender Abstand (24) gebildet,
e) der vom Verriegelungselement (5) von der das erste Bauteil (3) fixierenden Position (28) in die die Fixierung freigebende Position (29) ausgeführte Hub (B) ist größer als der Elektromagnet-Hub (A), **dadurch gekennzeichnet, dass** das Kernelement (22) in Richtung des Elektromagnet-Hubs (A) verschiebbar ausgebildet ist.

3. Einrichtung nach einem der vorhergehenden Ansprüche, **dadurch gekennzeichnet, dass** das erste Bauteil (3) durch eine auf das erste Bauteil (3) einwirkende Kraft (F) gegenüber der Verriegelungseinheit (6) in einer anderen Richtung bewegbar ist als die Richtung des Elektromagnet-Hubs (A).

4. Einrichtung nach einem der vorhergehenden Ansprüche, **dadurch gekennzeichnet, dass** über eine Kontaktstelle (40) zwischen dem ersten Bauteil (3) und dem Verriegelungselement (5) eine Kraftkomponente (F_{H}) in Richtung des vom Verriegelungselement (5) von der das erste Bauteil (3) fixierenden Position (28) in die die Fixierung freigebende Position (29) ausgeführten Hubs (B) erzeugt ist.

5. Einrichtung nach einem der vorhergehenden Ansprüche, **dadurch gekennzeichnet, dass** über eine Kontaktstelle (40) zwischen dem ersten Bauteil (3) und dem Verriegelungselement (5) eine Kraftkomponente (F_{H}) in Richtung des Elektromagnet-Hubs (A) erzeugt ist.

6. Einrichtung nach einem der vorhergehenden Ansprüche, **dadurch gekennzeichnet, dass** die Richtung des vom Verriegelungselement (5) von der das erste Bauteil (3) fixierenden Position (28) in die die Fixierung freigebende Position (29) ausgeführten Hubs (B) im Wesentlichen gleich der Richtung des Elektromagnet-Hubs (A).

7. Einrichtung nach Anspruch 2, **dadurch gekennzeichnet, dass** das Kernelement (22) ein Abstandshalteelement (25) aufweist, über das das verschiebbare Kernelement (22) bei unbetätigter Elektromagnetanordnung (21, 22, 25, 26, 27) in dem den Elektromagnet-Hub (A) definierenden Abstand von dem Anker (21) gehalten ist.

8. Einrichtung nach einem der Ansprüche 2 und 7, **dadurch gekennzeichnet, dass** das verschiebbare Kernelement (22) auf der dem Verriegelungselement (5) abgewandten Seite des Ankers (21) angeordnet ist.

9. Ventileinrichtung für eine Luftfederungsanlage in einem Fahrzeug mit folgenden Merkmalen:
a) die Ventileinrichtung (1) weist wenigstens einen mit einem Luftfederbalg der Luftfederungsanlage verbindbaren Balganschluss (13, 14), wenigstens einen mit einem Druckluftvorrat verbindbaren Vorratsanschluss (15) und wenigstens einen mit der Atmosphäre verbindbaren Entlüftungsanschluss (16) auf,
b) die Ventileinrichtung weist wenigstens ein manuelles Betätigungselement (2, 3, 7) auf, das wenigstens in die Stellungen Heben, Senken und Neutral stellbar ist,
c) in der Stellung Heben ist der Balganschluss (13, 14) mit dem Vorratsanschluss (15) verbunden,
d) in der Stellung Senken ist der Balganschluss (13, 14) mit dem Entlüftungsanschluss (16) verbunden,
e) die Ventileinrichtung (1) weist wenigstens einen Steuereingang für eine Steuerung der Ventileinrichtung (1) durch eine Niveauregelungseinrichtung auf,
f) in der Stellung Neutral ist der Balganschluss (13, 14) abhängig vom am Steuereingang anliegenden Signal entweder mit dem Vorratsanschluss (15) oder mit dem Entlüftungsanschluss (16) verbunden oder gegenüber diesen Anschlüssen abgesperrt,
g) die Ventileinrichtung (1) weist eine elektromagnetisch entriegelbare Einrichtung (6) nach wenigstens einem der vorhergehenden Ansprüche auf,
h) das manuelle Betätigungselement (2, 3, 7) ist über die elektromagnetisch entriegelbare Einrichtung (6) in wenigstens einer Stellung verriegelbar.

10. Ventileinrichtung für eine Luftfederungsanlage in einem Fahrzeug mit folgenden Merkmalen:
a) die Ventileinrichtung (1) weist wenigstens eine mit einem Luftfederbalg der Luftfederungsanlage verbindbaren Balganschluss (13, 14), wenigstens einen mit einem Druckluftvorrat verbindbaren Vorratsanschluss (15), wenigstens einen mit einer Niveauregelungseinrichtung verbindbaren Niveauregelungsanschluss (17) und wenigstens einen mit der Atmosphäre verbindbaren Entlüftungsanschluss (16) auf,
b) die Ventileinrichtung (1) weist wenigstens ein manuelles Betätigungselement (2, 3, 7) auf, das wenigstens in die Stellungen Heben, Senken, Stopp und Fahrt stellbar ist,
c) in der Stellung Heben ist der Balganschluss (13, 14) mit dem Vorratsanschluss (15) verbunden,
d) in der Stellung Senken ist der Balganschluss (13, 14) mit dem Entlüftungsanschluss (16) verbunden,
e) in der Stellung Stopp ist der Balganschluss (13, 14) abgesperrt,
f) in der Stellung Fahrt ist der Balganschluss (13, 14) mit dem Niveauregelungsanschluss (17) verbunden,
g) die Ventileinrichtung (1) weist eine elektromagnetisch entriegelbare Einrichtung (6) nach wenigstens einem der vorhergehenden Ansprüche auf,
h) das manuelle Betätigungselement (2, 3, 7) ist über die elektromagnetisch entriegelbare Einrichtung (6) in wenigstens einer Stellung verriegelbar.

## Claims

1. Electromagnetically unlockable device having a locking unit (6) and a first component (3) which can be moved with respect to the locking unit (6), having the following features:
a) the locking unit (6) has a locking element (5) which is in engagement with the first component (3) in order to secure the first component,
b) the locking element (5) can be adjusted, by activating an electromagnet arrangement (21, 22, 25, 26, 27), from the position (28) which secures the first component (3) into a position (29) which releases the securement,
c) the electromagnet arrangement (21, 22, 25, 26, 27) has at least one armature (21) and at least one core element (22),
d) a distance (24) which defines an electromagnet stroke (A) is formed between the core element (22) and the armature (21) when the electromagnet arrangement (21, 22, 25, 26, 27) is not activated, and
e) the stroke (B) which is executed by the locking element (5) from the position (28) which secures the first component (3) into the position (29) which releases the securement is larger than the electromagnet stroke (A), **characterized in that** the locking element (5) can be loaded into the position (28) which secures the first component (3), by means of an activation part (20) which can be displaced in the armature (21).

2. Electromagnetically unlockable device having a locking unit (6) and a first component (3) which can be moved with respect to the locking unit (6), having the following features:
a) the locking unit (6) has a locking element (5) which is in engagement with the first component (3) in order to secure the first component,
b) the locking element (5) can be adjusted, by activating an electromagnet arrangement (21, 22, 25, 26, 27), from the position (28) which secures the first component (3) into a position (29) which releases the securement,
c) the electromagnet arrangement (21, 22, 25, 26, 27) has at least one armature (21) and at least one core element (22),
d) a distance (24) which defines an electromagnet stroke (A) is formed between the core element (22) and the armature (21) when the electromagnet arrangement (21, 22, 25, 26, 27) is not activated, and
e) the stroke (B) which is executed by the locking element (5) from the position (28) which secures the first component (3) into the position (29) which releases the securement is larger than the electromagnet stroke (A), **characterized in that** the core element (22) is embodied so as to be displaceable in the direction of the electromagnetic stroke (A).

3. Device according to either of the preceding claims, **characterized in that** the first component (3) can be moved in another direction with respect to the locking unit (6) than the direction of the electromagnet stroke (A), by a force (F) acting on the first component (3).

4. Device according to one of the preceding claims, **characterized in that**, via a contact point (40) between the first component (3) and the locking element (5), a force component (F_{H}) is generated in the direction of the stroke (B) executed by the locking element (5) from the position (28) which secures the first component (3) into the position (29) which releases the securement.

5. Device according to one of the preceding claims, **characterized in that**, via a contact point (40), a force component (F_{H}) is generated in the direction of the electromagnet stroke (A) between the first component (3) and the locking element (5).

6. Device according to one of the preceding claims, **characterized in that** the direction of the stroke (B) which is executed by the locking element (5) from the position (28) which secures the first component (3) into the position (29) which releases the securement, is essentially the same as the direction of the electromagnet stroke (A).

7. Device according to Claim 2, **characterized in that** the core element (22) has a spacer element (25) which, when the electromagnet arrangement (21, 22, 25, 26, 27) is not activated, holds the displaceable core element (22) at the distance from the armature (21) which defines the electromagnet stroke (A).

8. Device according to one of Claims 2 and 7, **characterized in that** the displaceable core element (22) is arranged on the side of the armature (21) facing away from the locking element (5).

9. Valve device for an air suspension system in a vehicle, having the following features:
a) the valve device (1) has at least one bellows connection (13, 14) which can be connected to an air spring bellows of the air suspension system, at least one supply connection (15) which can be connected to a compressed air supply and at least one venting connection (16) which can be connected to the atmosphere,
b) the valve device has at least one manual activation element (2, 3, 7) which can be set at least to the lift, lower and neutral positions,
c) in the lift position the bellows connection (13, 14) is connected to the supply connection (15),
d) in the lower position the bellows connection (13, 14) is connected to the venting connection (16),
e) the valve device (1) has at least one control input for controlling the valve device (1) by means of a ride level control device,
f) in the neutral position the bellows connection (13, 14) is connected either to the supply connection (15) or to the venting connection (16) as a function of the signal present at the control input or is shut off from these connections,
g) the valve device (1) has an electromagnetically unlockable device (6) according to at least one of the preceding claims, and
h) the manual activation element (2, 3, 7) can be locked in at least one position by means of the electromagnetically unlockable device (6).

10. Valve device for an air suspension system in a vehicle, having the following features:
a) the valve device (1) has at least one bellows connection (13, 14) which can be connected to the air spring bellows of the air suspension system, at least one supply connection (15) which can be connected to a compressed air supply, at least one ride level control connection (17) which can be connected to a ride level control device and at least one venting connection (16) which can be connected to the atmosphere,
b) the valve device (1) has at least one manual activation element (2, 3, 7) which can be set at least to the lift, lower, stop and travel positions,
c) in the lift position the bellows connection (13, 14) is connected to the supply connection (15),
d) in the lower position the bellows connection (13, 14) is connected to the venting connection (16),
e) in the stop position the bellows connection (13, 14) is shut off,
f) in the travel position the bellows connection (13, 14) is connected to the ride level control connection (17),
g) the valve device (1) has an electromagnetically unlockable device (6) according to at least one of the preceding claims, and
h) the manual activation element (2, 3, 7) can be locked in at least one position by means of the electromagnetically unlockable device (6).

## Revendications

1. Dispositif pouvant être déverrouillé électromagnétiquement comprenant une unité de verrouillage (6) et un premier composant (3) déplaçable par rapport à l'unité de verrouillage (6), présentant les caractéristiques suivantes :
a) l'unité de verrouillage (6) comprend un élément de verrouillage (5) en prise avec le premier composant (3) en vue de la fixation du premier composant,
b) l'élément de verrouillage (5) peut être réglé, par actionnement d'un ensemble d'électroaimant (21, 22, 25, 26, 27), d'une position (28) de fixation du premier composant (3) à une position (29) de libération de la fixation,
c) l'ensemble d'électroaimant (21, 22, 25, 26, 27) comprend au moins une armature (21) et au moins un élément de noyau (22),
d) une distance (24) définissant une course d'électroaimant (A) est formée entre l'élément de noyau (22) et l'armature (21) lorsque l'ensemble d'électroaimant (21, 22, 25, 26, 27) n'est pas actionné,
e) la course (B) effectuée par l'élément de verrouillage (5) de la position (28) de fixation du premier composant (3) à la position (29) de libération de la fixation est supérieure à la course d'électroaimant (A), **caractérisé en ce que** l'élément de verrouillage (5) peut être sollicité dans la position (28) de fixation du premier composant (3) par le biais d'une partie d'actionnement (20) mobile dans l'armature (21).

2. Dispositif pouvant être déverrouillé électromagnétiquement comprenant une unité de verrouillage (6) et un premier composant (3) déplaçable par rapport à l'unité de verrouillage (6), présentant les caractéristiques suivantes :
a) l'unité de verrouillage (6) comprend un élément de verrouillage (5) en prise avec le premier composant (3) en vue de la fixation du premier composant,
b) l'élément de verrouillage (5) peut être réglé, par actionnement d'un ensemble d'électroaimant (21, 22, 25, 26, 27), d'une position (28) de fixation du premier composant (3) à une position (29) de libération de la fixation,
c) l'ensemble d'électroaimant (21, 22, 25, 26, 27) comprend au moins une armature (21) et au moins un élément de noyau (22),
d) une distance (24) définissant une course d'électroaimant (A) est formée entre l'élément de noyau (22) et l'armature (21) lorsque l'ensemble d'électroaimant (21, 22, 25, 26, 27) n'est pas actionné,
e) la course (B) effectuée par l'élément de verrouillage (5) de la position (28) de fixation du premier composant (3) à la position (29) de libération de la fixation est supérieure à la course d'électroaimant (A), **caractérisé en ce que** l'élément de noyau (22) est réalisé de manière mobile dans la direction de la course d'électroaimant (A).

3. Dispositif selon l'une quelconque des revendications précédentes, **caractérisé en ce que** le premier composant (3) est déplaçable par rapport à l'unité de verrouillage (6) dans une autre direction que la direction de la course d'électroaimant (A) au moyen d'une force (F) agissant sur le premier composant (3).

4. Dispositif selon l'une quelconque des revendications précédentes, **caractérisé en ce que**, par le biais d'un point de contact (40) entre le premier composant (3) et l'élément de verrouillage (5), une composante de force (F_{H}) est produite dans la direction de la course (B) effectuée par l'élément de verrouillage (5) de la position (28) de fixation du premier composant (3) à la position (29) de libération de la fixation.

5. Dispositif selon l'une quelconque des revendications précédentes, **caractérisé en ce que**, par le biais d'un point de contact (40) entre le premier composant (3) et l'élément de verrouillage (5), une composante de force (F_{H}) est produite dans la direction de la course d'électroaimant (A).

6. Dispositif selon l'une quelconque des revendications précédentes, **caractérisé en ce que** la direction de la course (B) effectuée par l'élément de verrouillage (5) de la position (28) de fixation du premier composant (3) à la position (29) de libération de la fixation est essentiellement identique à la direction de la course d'électroaimant (A).

7. Dispositif selon la revendication 2, **caractérisé en ce que** l'élément de noyau (22) comprend un élément d'espacement (25), par le biais duquel l'élément de noyau mobile (22) est maintenu, lorsque l'ensemble d'électroaimant (21, 22, 25, 26, 27) n'est pas actionné, à la distance de l'armature (21) définissant la course d'électroaimant (A).

8. Dispositif selon l'une quelconque des revendications 2 et 7, **caractérisé en ce que** l'élément de noyau mobile (22) est disposé sur le côté de l'armature (21) opposé à l'élément de verrouillage (5).

9. Dispositif formant soupape pour un système de suspension pneumatique dans un véhicule, présentant les caractéristiques suivantes :
a) le dispositif formant soupape (1) comprend au moins un raccord de soufflet (13, 14) pouvant être relié à un soufflet de ressort pneumatique du système de suspension pneumatique, au moins un raccord de réserve (15) pouvant être relié à une réserve d'air comprimé et au moins un raccord d'évacuation d'air (16) pouvant être relié à l'atmosphère,
b) le dispositif formant soupape comprend au moins un élément d'actionnement manuel (2, 3, 7) qui peut être réglé au moins dans les positions soulever, abaisser et neutre,
c) dans la position soulever, le raccord de soufflet (13, 14) est relié au raccord de réserve (15),
d) dans la position abaisser, le raccord de soufflet (13, 14) est relié au raccord d'évacuation d'air (16),
e) le dispositif formant soupape (1) comprend au moins une entrée de commande pour une commande du dispositif formant soupape (1) au moyen d'un dispositif de régulation de niveau,
f) dans la position neutre, le raccord de soufflet (13, 14) est, en fonction du signal appliqué à l'entrée de commande, relié soit au raccord de réserve (15) soit au raccord d'évacuation d'air (16) ou fermé par rapport à ces raccords,
g) le dispositif formant soupape (1) comprend un dispositif (6) pouvant être déverrouillé électromagnétiquement selon au moins l'une quelconque des revendications précédentes,
h) l'élément d'actionnement manuel (2, 3, 7) peut être verrouillé dans au moins une position par le biais du dispositif (6) pouvant être déverrouillé électromagnétiquement.

10. Dispositif formant soupape pour un système de suspension pneumatique dans un véhicule, présentant les caractéristiques suivantes :
a) le dispositif formant soupape (1) comprend au moins un raccord de soufflet (13, 14) pouvant être relié à un soufflet de ressort pneumatique du système de suspension pneumatique, au moins un raccord de réserve (15) pouvant être relié à une réserve d'air comprimé, au moins un raccord de régulation de niveau (17) pouvant être relié à un dispositif de régulation de niveau et au moins un raccord d'évacuation d'air (16) pouvant être relié à l'atmosphère,
b) le dispositif formant soupape (1) comprend au moins un élément d'actionnement manuel (2, 3, 7) qui peut être réglé au moins dans les positions soulever, abaisser, arrêt et conduite,
c) dans la position soulever, le raccord de soufflet (13, 14) est relié au raccord de réserve (15),
d) dans la position abaisser, le raccord de soufflet (13, 14) est relié au raccord d'évacuation d'air (16),
e) dans la position arrêt, le raccord de soufflet (13, 14) est fermé,
f) dans la position conduite, le raccord de soufflet (13, 14) est relié au raccord de régulation de niveau (17),
g) le dispositif formant soupape (1) comprend un dispositif (6) pouvant être déverrouillé électromagnétiquement selon au moins l'une quelconque des revendications précédentes,
h) l'élément d'actionnement manuel (2, 3, 7) peut être verrouillé dans au moins une position par le biais du dispositif (6) pouvant être déverrouillé électromagnétiquement.
